# EUROPEAN PATENT SPECIFICATION

(11) **EP 3 780 878 B1**
(45) Date of publication and mention of the grant of the patent: **26.04.2023**
(21) Application number: 19818896.3
(22) Date of filing: 22.02.2019
(51) Int. Cl.: H04W 76/19, H04W 36/30

(54) **RLF PROCESSING METHOD AND APPARATUS, AND COMMUNICATION SYSTEM**
VERFAHREN UND VORRICHTUNG ZUR RLF-VERARBEITUNG UND KOMMUNIKATIONSSYSTEM
PROCÉDÉ ET APPAREIL DE TRAITEMENT RLF ET SYSTÈME DE COMMUNICATION

(30) Priority: 12.06.2018 CN 201810603996
(43) Date of publication of application: 17.02.2021
(73) Proprietor: GUANGDONG OPPO MOBILE TELECOMMUNICATIONS CORP., LTD., Wusha, Chang'an Dongguan Guangdong 523860 (CN)
(72) Inventor: YANG, Ning, Dongguan, Guangdong 523860 (CN)
(74) Representative: RGTH
(86) International application number: PCT/CN2019/075963
(87) International publication number: WO 2019/237763

(56) References cited:
- EP-A1- 3 566 539
- EP-A1- 3 624 547
- WO-A1-2018/028969
- CN-A- 104 349 361
- CN-A- 104 468 029
- US-A1- 2015 181 479
- US-A1- 2016 014 628
- US-A1- 2017 374 705
- ERICSSON: "RLM and RLF in NR", 3GPP DRAFT; R2-1700546 - RLM AND RLF IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051211118, Retrieved from the Internet: URL:http://www.3gpp.org/ftp/Meetings_3GPP_ SYNC/RAN2/Docs/ [retrieved on 2017-01-17]
- NOKIA ET AL: "Dual connected intra-frequency handover for 0 ms interruption and mobility robustness", 3GPP DRAFT; R2-1803345 DUAL CONNECTED INTRA-FREQUENCY HANDOVER FOR 0 MS INTERRUPTION AND MOBILITY ROBUSTNESS, 3RD GENERATION PARTNERSHIP PROJECT (3GPP), MOBILE COMPETENCE CENTRE ; 650, ROUTE DES LUCIO , vol. RAN WG2, no. Athens, Greece; 20180226 - 20180302 16 February 2018 (2018-02-16), XP051400477, Retrieved from the Internet: URL:http://www.3gpp.org/ftp/tsg%5Fran/WG2% 5FRL2/TSGR2%5F101/Docs/ [retrieved on 2018-02-16]

## Description

### TECHNICAL FIELD

Embodiments of the disclosure relate to the technical field of mobile communication, and particularly to a method for Radio Link Failure (RLF) processing, and a communication system.

### BACKGROUND

To meet people's pursuits of rates, delays, high-speed mobility and energy efficiency of services as well as diversity and complexity of services in the future, the 3rd Generation Partnership Project (3GPP) starts researching and developing 5th Generation (5G).

Main application scenarios of 5G are Enhance Mobile Broadband (eMBB), Ultra Reliable Low latency Communication (URLLC) and massive Machine Type Communication (mMTC).

During early deployment of New Radio (NR), it is difficult to implement complete NR coverage, and thus typical network coverage includes a wide area Long Term Evolution (LTE) coverage mode and an NR island coverage mode. Moreover, LTE is mostly deployed below 6GHz and there are few spectrums for 5G below 6GHz, so that it is necessary to research application of spectrums above 6GHz for NR. However, a high frequency band is limited in coverage and fast in signal fading. Meanwhile, for protecting previous LTE investments of a mobile operating company, a working mode of tight interworking between LTE and NR is proposed. Of course, NR may also be deployed independently.

No matter whether a network mode is independent deployment or dependent deployment, Radio Link Monitoring (RLM) is required. RLF is a scenario where User Equipment (UE) is located and signal quality is low and does not meet a service requirement. A physical layer of the UE detects a physical signal and reports a synchronism indication and an out-of-synchronism indication to a Radio Resource Control (RRC) layer, the RRC layer detects the synchronism indication and the out-of-synchronism indication in specified timer time to determine whether to declare an RLF, and once the RLF is declared, the UE starts a cell searching process and finds a proper cell to initiate an RRC reestablishment process or an RRC resume process.

In Dual Connectivity (DC) (including Evolved Universal Mobile Telecommunication System (UTMS) Terrestrial Radio Access (E-UTRA)-NR DC (EN-DC), NR-E-UTRA DC (NE-DC), 5G Core (5GC)-EN-DC and NR DC), when an RLF occurs in a Master Node (MN) side, UE may be triggered for an RRC connection reestablishment process, which results in service interruption. When an RLF occurs in a Secondary Node (SN) side, the UE may suspend data transmission of a Secondary Cell Group (SCG) side and send SCG RLF indication information to the MN side, the information including a measurement result. For the abovementioned DC scenarios, if the RLF occurs in the MN side but the SCG side is high in signal quality, an RRC connection reestablishment flow may be performed, which results in service interruption.

US 2015/181479 A1 discloses a mechanism for radio link monitoring and radio link failure handling in small cell networks.

EP 3 566 539 A1 discloses a radio network nodes, wireless device, and method performed therein for handling connections in a wireless communication network.

EP 3 624 547 A1 discloses a method and apparatus for processing mobility in a dual RRC system.

WO 2018/028969 A1 discloses communications devices, infrastructure equipment and methods.

### SUMMARY

The embodiments of the disclosure provide a method for RLF processing, and a communication system. An RLF may be processed without interrupting service data of UE.

The invention is set out in the appended set of claims.

Through the technical solutions, when an RLF occurs in a Physical Cell (Pcell), i.e., a Master Cell Group (MCG), of an MN side, RRC connection reestablishment is not triggered, and instead, an MCG RLF indication message (i.e., a first message) is reported to an MN by an SN side to trigger the MN to perform a handover process to solve the problem of the MCG RLF, so that the RLF may further be processed without interrupting service data of UE.

### BRIEF DESCRIPTION OF THE DRAWINGS

FIG. 1 is an architecture diagram of a communication system according to an embodiment of the disclosure.
FIG. 2 is a schematic diagram of an RLF process according to an embodiment of the disclosure.
FIG. 3 is a first flowchart of a method for processing RLF according to an embodiment of the disclosure not covered by the claimed invention.
FIG. 4 is a second flowchart of a method for processing RLF according to an embodiment of the disclosure.
FIG. 5 is a third flowchart of a method for processing RLF according to an embodiment of the disclosure.
FIG. 6 is a fourth flowchart of a method for processing RLF according to an embodiment of the disclosure.
FIG. 7 is a first structure composition diagram of a device for processing RLF according to an embodiment of the disclosure not covered by the claimed invention.
FIG. 8 is a second structure composition diagram of a device for processing RLF according to an embodiment of the disclosure not covered by the claimed invention.
FIG. 9 is a schematic structure diagram of a communication device according to an embodiment of the disclosure not covered by the claimed invention.
FIG. 10 is a schematic structure diagram of a chip according to another embodiment of the disclosure not covered by the claimed invention.
FIG. 11 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure.

The technical solutions of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a UMTS, a Worldwide Interoperability for Microwave Access (WiMAX) communication system or a future 5G system.

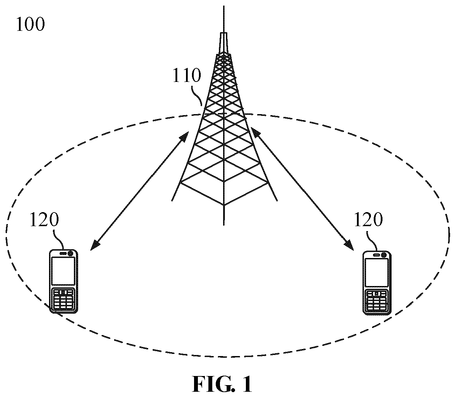

Exemplarily, a communication system 100 that the embodiments of the disclosure are applied to is illustrated in FIG. 1. The communication system 100 may include a network device 110, and the network device 110 may be a device communicating with a terminal device 120 (or called a communication terminal and a terminal). The network device 110 may provide communication coverage for a specific geographical region and may communicate with a terminal device located in the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a mobile switching center, a relay station, an access point, a vehicle device, a wearable device, a hub, a switch, a network bridge, a router, a network-side device in a future 5G network, a network device in a future evolved Public Land Mobile Network (PLMN) or the like.

The communication system 100 further includes at least one terminal device 120 within the coverage of the network device 110. A "terminal device" used herein includes, but not limited to, a device arranged to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another communication terminal, and/or an Internet of Things (IoT) device. The terminal device arranged to communicate through a wireless interface may be called a "wireless communication terminal", a "wireless terminal" or a "mobile terminal." Examples of a mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device , a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, the terminal device 120 may perform Device to Device (D2D) communication.

Optionally, the 5G system or the 5G network may also be called an NR system or an NR network.

A network device and two terminal devices are exemplarily illustrated in FIG. 1. Optionally, the communication system 100 may include multiple network devices and another number of terminal devices may be included in coverage of each network device. There are no limits made thereto in the embodiments of the disclosure.

Optionally, the communication system 100 may further include another network entity such as a network controller and a mobility management entity. There are no limits made thereto in the embodiments of the disclosure.

It is to be understood that a device with a communication function in the network/system in the embodiments of the disclosure may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There are no limits made thereto in the embodiments of the disclosure.

It is to be understood that terms "system" and "network" in the disclosure may usually be exchanged in the disclosure. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

The technical solutions of the embodiments of the disclosure are mainly applied to a 5G system. Of course, the technical solutions of the embodiments of the disclosure are not limited to the 5G system and may also be applied to mobile communication systems of other types. Main application scenarios of the 5G system will be described below.
1) An eMBB scenario: eMBB aims to enable a user to obtain a multimedia content, service and data, and service requirements thereof increase rapidly. Since eMBB may be deployed in different scenarios, for example, a room, an urban area and a rural area, and service capabilities and requirements thereof are also greatly different, it is necessary to analyze a service in combination with a specific deployment scenario.
2) A URLLC scenario: typical applications of URLLC include industrial automation, power automation, remote medical operation, traffic safety guarantee and the like.
3) An mMTC scenario: typical characteristics of URLLC include high connection density, small data volume, delay-insensitive services, low cost and long service life of modules and the like.

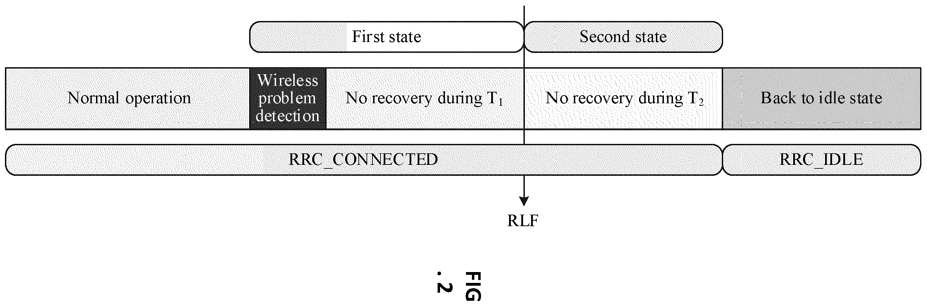

The technical solutions of the embodiments of the disclosure are mainly applied to a DC network architecture, including EN-DC, NE-DC, 5GC-EN-DC and NR DC. For conveniently understanding the technical solutions of the embodiments of the disclosure, an RLF process will be described below with reference to FIG. 2.
1) Determination of out-of-synchronism in downlink of UE on a network side involves the following timers and constants: N310, T310 and N311. These timers and constants may be configured for the UE by the network side through dedicated signaling (for example, RLF-TimersAndConstants IE). If not being configured by the network side through the dedicated signaling, these timers and constants are configured for the UE by use of a parameter (ue-TimersAndConstants IE) in a system broadcast (System Information Block (SIB) 2).
2) When the UE is in an RRC_CONNECTED state, N310 continuous "out_of_Sync" are received and T310, T301, T304 and T311 do not run, the timer T310 is started. If N311 continuous "in_Sync" are received before the timer expires, the timer T310 is stopped, and it is indicated that the UE has recovered downlink synchronism. Otherwise the UE is in a downlink out-of-synchronism state, namely an RLF occurs.
3) When the UE declares the RLF, the UE starts the timer T311 and performs cell searching and cell selection. The UE, when finding a proper cell before the timer expires, initiates an RRC connection reestablishment process to the proper cell, otherwise enters an RRC_IDLE state. After the UE enters the RRC_IDLE state, RRC may trigger a Non-Access Stratum (NAS) to initiate a location update process to try to resume an RRC connection.

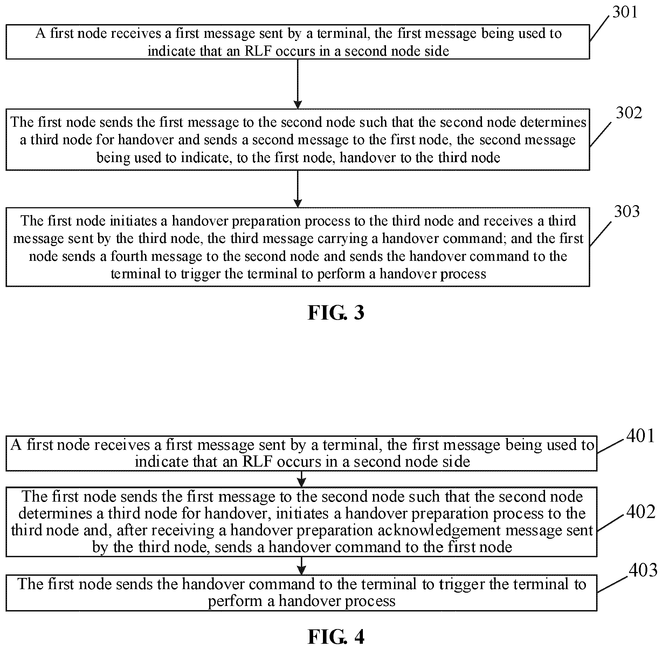

FIG. 3 is a first flowchart of a method for processing RLF according to an embodiment of the disclosure not covered by the claimed invention. As illustrated in FIG. 3, the method for processing RLF includes the following steps.

In 301, a first node receives a first message sent by a terminal, the first message being used to indicate that an RLF occurs in a second node side.

In the embodiment of the disclosure, the first node refers to an SN in a DC network, and the second node refers to an MN in the DC network. Furthermore, the second node refers to a source MN providing service for the terminal. Relatively, a third node refers to a target MN providing service for the terminal.

In the embodiment of the disclosure, the terminal is in an RRC_CONNECTED state and works in a DC mode to perform RLM to detect link states of an MN side (i.e., the second node) and an SN side (i.e., the first node). 1) When an RLF occurs in the second node side and signal quality of the first node side is higher than a predetermined threshold value, the terminal sends the first message to the first node. 2) When the RLF occurs in the second node side and the signal quality of the first node side is lower than or equal to the predetermined threshold value, the terminal initiates an RRC connection reestablishment process; or, when the RLF occurs in the second node side and an RLF occurs in the first node side, the terminal initiates the RRC connection reestablishment process.

Herein, the predetermined threshold value may be predetermined in a protocol, or broadcast by a system or configured through RRC dedicated signaling.

Herein, the predetermined threshold value may be predetermined in the protocol, or broadcast by the system or configured through the RRC dedicated signaling.

In the embodiment of the disclosure, the first message sent to the first node by the terminal includes at least one of the following information:
a measurement result;
first indication information used to indicate a handover request; and
second indication information used to indicate that the RLF occurs in the second node side.

In the embodiment of the disclosure, the first message is sent from the first node to the second node in a container form via an Xn interface; or, the first message is sent from the first node to the second node with a content of the first message born in an Xn message.

In 302, the first node sends the first message to the second node such that the second node determines a third node for handover and sends a second message to the first node, the second message being used to indicate, to the first node, handover to the third node.

In the embodiment of the disclosure, the second node may determine the third node for handover in the following manners.

A first manner: the second node determines the third node for handover based on the measurement result included in the first message.

A second manner: the second node directly determines the third node for handover, namely the second node performs a blind handover process without referring to the measurement result, for example, performing direct handover to the first node.

In 303, the first node initiates a handover preparation process to the third node and receives a third message sent by the third node, the third message carrying a handover command; and the first node sends a fourth message to the second node and sends the handover command to the terminal to trigger the terminal to perform a handover process.

In the embodiment of the disclosure, after handover from the first node to the third node, the second node and the third node form a DC network. Therefore, in the handover preparation process, the first node and the third node allocate to each other GPRS Tunneling Protocol (GTP) identification information for splitting and bearing of interactive data. Specifically, the first node allocates to the third node the GTP identification information for splitting and bearing, and then the third node may send corresponding data to be split and born to the first node based on the GTP identification information. Similarly, the third node allocates to the first node the GTP identification information for splitting and bearing, and then the first node may send corresponding data for splitting and bearing to the third node based on the GTP identification information.

Furthermore, since the second node side still communicates with a core network side, the second node is required to forward signaling data between the second node side and the core network side to the third node. Based on this, in the handover preparation process, the third node allocates to the second node GTP identification information for forwarding data and carries the GTP identification information allocated to the second node for forwarding data in the fourth message, the GTP identification information for forwarding data including first GTP identification information for forwarding uplink data and second GTP identification information for forwarding downlink data. Then, the second node may forward the signaling data of the core network side to the third node based on the GTP identification information.

In the embodiment of the disclosure, the handover command sent to the terminal by the first node carries third indication information, the third indication information being used to indicate that the handover command is triggered by the second node.

In the solution, after the terminal sends the first message to the first node, the first message being used to indicate that the RLF and/or a handover failure occur(s) in the second node side (for example, the first message includes MCG RLF indication information, the MCG RLF indication information being used to indicate that the RLF occurs in the second node side), if the terminal does not receive target signaling sent by a network side, the terminal triggers the RRC connection reestablishment process.

Herein, the first message includes at least one of the following information:
the measurement result;
the first indication information used to indicate the handover request; and
the second indication information used to indicate that the RLF and/or the handover failure occur(s) in the second node side.

In an implementation, after the terminal sends the first message to the first node, a first timer is started; if the terminal does not receive the target signaling sent by the network side before the first timer expires, the terminal triggers the RRC connection reestablishment process; and if the terminal receives the target signaling sent by the network side before the first timer expires, the terminal stops the first timer.

In the solution, the target signaling refers to any signaling sent by the network side. For example, the target signaling at least includes the handover command or RRC connection reconfiguration signaling.

FIG. 4 is a second flowchart of a method for processing RLF according to an embodiment of the disclosure. As illustrated in FIG. 4, the method for processing RLF includes the following steps.

In 401, a first node receives a first message sent by a terminal, the first message being used to indicate that an RLF occurs in a second node side.

In the embodiment of the disclosure, the first node refers to an SN in a DC network, and the second node refers to an MN in the DC network. Furthermore, the second node refers to a source MN providing service for the terminal. Relatively, a third node refers to a target MN providing service for the terminal.

In the embodiment of the disclosure, the terminal is in an RRC_CONNECTED state and works in a DC mode to perform RLM to detect link states of an MN side (i.e., the second node) and an SN side (i.e., the first node). 1) When an RLF occurs in the second node side and signal quality of a first node side is higher than a predetermined threshold value, the terminal sends the first message to the first node. 2) When the RLF occurs in the second node side and the signal quality of the first node side is lower than or equal to the predetermined threshold value, the terminal initiates an RRC connection reestablishment process; or, when the RLF occurs in the second node side and an RLF occurs in the first node side, the terminal initiates the RRC connection reestablishment process.

In the embodiment of the disclosure, the first message sent to the first node by the terminal includes at least one of the following information:
a measurement result;
first indication information used to indicate a handover request; and
second indication information used to indicate that the RLF occurs in the second node side.

In the embodiment of the disclosure, the first message is sent from the first node to the second node in a container form via an Xn interface; or, the first message is sent from the first node to the second node with a content of the first message born in an Xn message.

In 402, the first node sends the first message to the second node such that the second node determines a third node for handover, initiates a handover preparation process to the third node and, after receiving a handover preparation acknowledgement message sent by the third node, sends a handover command to the first node.

In the embodiment of the disclosure, the second node may determine the third node for handover in the following manners.

A first manner: the second node determines the third node for handover based on the measurement result included in the first message.

A second manner: the second node directly determines the third node for handover, namely the second node performs a blind handover process without referring to the measurement result, for example, performing direct handover to the first node.

In the embodiment of the disclosure, in the handover preparation process, the second node sends to the third node GTP identification information, which is allocated to the second node by the first node for splitting and bearing of interactive data. Then, the third node may send the corresponding data for splitting and bearing to the first node based on the GTP identification information.

In the embodiment of the disclosure, since the second node side still communicates with a core network side, the second node is required to forward signaling data between the second node side and the core network side to the third node. Based on this, the handover preparation acknowledgement message carries GTP identification information, which is allocated to the second node by the third node for forwarding data, the GTP identification information for forwarding data including first GTP identification information for forwarding uplink data and second GTP identification information for forwarding downlink data. Then, the second node may forward the signaling data of the core network side to the third node based on the GTP identification information.

Furthermore, the handover preparation acknowledgement message further carries GTP identification information, which is allocated to the first node by the third node for splitting and bearing of the interactive data. Correspondingly, the handover command sent to the first node by the second node carries the GTP identification information, which is allocated to the first node by the third node for splitting and bearing of the interactive data. Then, the first node may send the corresponding data to be split and born to the third node based on the GTP identification information.

In 403, the first node sends the handover command to the terminal to trigger the terminal to perform a handover process.

In the embodiment of the disclosure, the handover command sent to the terminal by the first node carries third indication information, the third indication information being used to indicate that the handover command is triggered by the second node.

In the solution, after the terminal sends the first message to the first node, the first message being used to indicate that the RLF and/or a handover failure occur(s) in the second node side (for example, the first message includes MCG RLF indication information, the MCG RLF indication information being used to indicate that the RLF occurs in the second node side), if the terminal does not receive target signaling sent by a network side, the terminal triggers the RRC connection reestablishment process.

Herein, the first message includes at least one of the following information:
the measurement result;
the first indication information used to indicate the handover request; and
the second indication information used to indicate that the RLF and/or the handover failure occur(s) in the second node side.

In an implementation, after the terminal sends the first message to the first node, a first timer is started; if the terminal does not receive the target signaling sent by the network side before the first timer expires, the terminal triggers the RRC connection reestablishment process; and if the terminal receives the target signaling sent by the network side before the first timer expires, the terminal stops the first timer.

In the solution, the target signaling refers to any signaling sent by the network side. For example, the target signaling at least includes the handover command or RRC connection reconfiguration signaling.

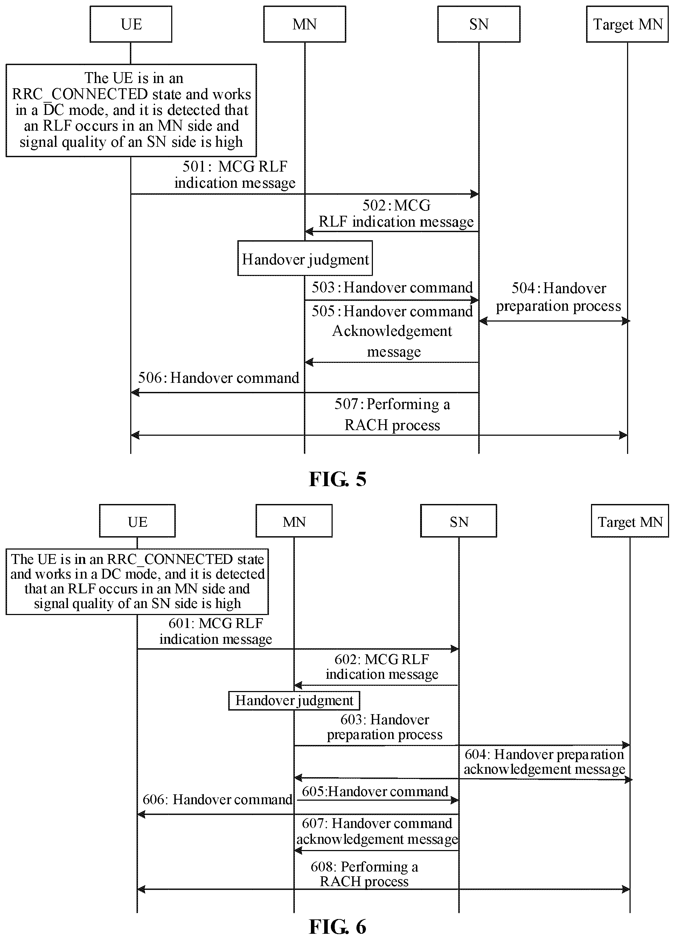

FIG. 5 is a third flowchart of a method for processing RLF according to an embodiment of the disclosure. As illustrated in FIG. 5, the method for processing RLF includes the following steps.

In 501, UE sends an MCG RLF indication message to an SN.

Herein, the UE is in an RRC_CONNECTED state and works in a DC mode. When it is detected that an RLF occurs in an MN side and signal quality of an SN side is high, an RRC connection reestablishment process is not triggered, and instead, the MCG RLF indication message is sent to the SN. The MCG RLF indication message may be sent through a Signaling Radio Bearer (SRB) 3 and may also be sent through a newly defined RRC signaling message.

Herein, the MCG RLF indication message includes at least one of the following information:
an available measurement result, handover request indication information and indication information used to indicate that the RLF occurs in the MN side.

In 502, the SN, after receiving the MCG RLF indication message, forwards the MCG RLF indication message to an MN.

The MCG RLF indication message may be sent to the MN side in a container form via an Xn interface, or, an Xn message bearing a content of the MCG RLF indication message may be sent to the MN.

In 503, the MN, after receiving the MCG RLF indication message, sends a handover command to the SN.

Herein, the MN, after receiving the MCG RLF indication message, makes a handover judgment, determines a target cell (i.e., a target MN) and sends the target MN to the SN through the Xn interface to trigger a handover process. The MN may make the handover judgment according to the measurement result included in the MCG RLF indication message, or, the MN performs a blind handover process without referring to the measurement result, for example, directly executing handover to the SN.

In 504, the SN initiates a handover preparation process to a target MN.

Herein, the SN, after receiving the handover command of the MN, initiates the handover preparation process to the target MN and receives a handover command sent by the target MN.

In this process, the target MN may allocate GTP tunnel numbers to the original MN for forwarding data. There are totally two TGP tunnels, one being configured for forwarding uplink data and the other being configured for forwarding downlink data. Meanwhile, the SN and the target MN further allocate to each other GTP tunnel numbers for splitting and bearing of interactive data.

In 505, the SN sends a handover command acknowledgement message to the MN.

Herein, the handover command acknowledgement message carries the GTP tunnel numbers allocated to the original MN by the target MN for forwarding data.

In 506, the SN sends the handover command to the UE.

Herein, the SN sends the handover command to the UE through an RRC connection reconfiguration message or a new message, and an indication indicating that the handover command is triggered by the target MN is carried.

In 507, the UE, after receiving the handover command, performs a Random Access Channel (RACH) process.

In the embodiment of the disclosure, when RLFs occur in both the MN side and the SN side, the UE performs an RRC connection reestablishment process. Or, when the RLF occurs in the MN side and the signal quality of the SN side is lower than a certain threshold, the UE is also triggered to perform the RRC connection reestablishment process. Herein, the threshold may be predetermined in a protocol, or broadcast by a system or configured through RRC dedicated signaling.

FIG. 6 is a fourth flowchart of a method for processing RLF according to an embodiment of the disclosure. As illustrated in FIG. 6, the method for processing RLF includes the following steps.

In 601, UE sends an MCG RLF indication message to an SN.

Herein, the UE is in an RRC_CONNECTED state and works in a DC mode. When it is detected that an RLF occurs in an MN side and signal quality of an SN side is high, an RRC connection reestablishment process is not triggered, and instead, the MCG RLF indication message is sent to the SN. The MCG RLF indication message may be sent through an SRB3 and may also be sent through a newly defined RRC signaling message.

Herein, the MCG RLF indication message includes at least one of the following information:

An available measurement result, handover request indication information and indication information configured to indicate that the RLF occurs in the MN side.

In 602, the SN, after receiving the MCG RLF indication message, forwards the MCG RLF indication message to an MN.

The MCG RLF indication message is sent to the MN side in a container form via an Xn interface, or, an Xn message bearing a content of the MCG RLF indication message is sent to the MN.

Herein, the MN, after receiving the MCG RLF indication message, makes a handover judgment and determines a target cell (i.e., a target MN). The MN may make the handover judgment according to the measurement result included in the MCG RLF indication message, or, the MN performs a blind handover process without referring to the measurement result, for example, directly performing handover to the SN.

In 603, the MN initiates a handover preparation process to a target MN.

In this process, the original MN sends to the target MN a GTP tunnel number for data transmission between the original MN and the SN.

In 604, the target MN sends a handover preparation acknowledgement message to the MN.

Herein, in the handover preparation acknowledgement message, the target MN may allocate to the original MN GTP tunnel numbers for forwarding data between the target MN and the original MN. Furthermore, the target MN may allocate to the SN a GTP tunnel number for data transmission between the target MN and the SN.

In 605, the MN sends a handover command to the SN.

Herein, the MN notifies to the SN the GTP tunnel number allocated by the target MN for data transmission between the target MN and the SN in the handover command.

In 606, the SN sends the handover command to the UE.

Herein, the SN, after receiving the handover command of the MN, sends the handover command to the UE through an RRC connection reconfiguration message or a new message, and an indication indicating that the handover command is generated by the target MN side is carried.

In 607, the SN sends a handover command acknowledgement message to the MN.

In 608, the UE, after receiving the handover command, performs a RACH process.

In the embodiment of the disclosure, when RLFs occur in both the MN side and the SN side, the UE performs an RRC connection reestablishment process. Or, when the RLF occurs in the MN side and the signal quality of the SN side is lower than a certain threshold, the UE is also triggered to perform the RRC connection reestablishment process. Herein, the threshold may be predetermined in a protocol, or broadcast by a system or configured through RRC dedicated signaling.

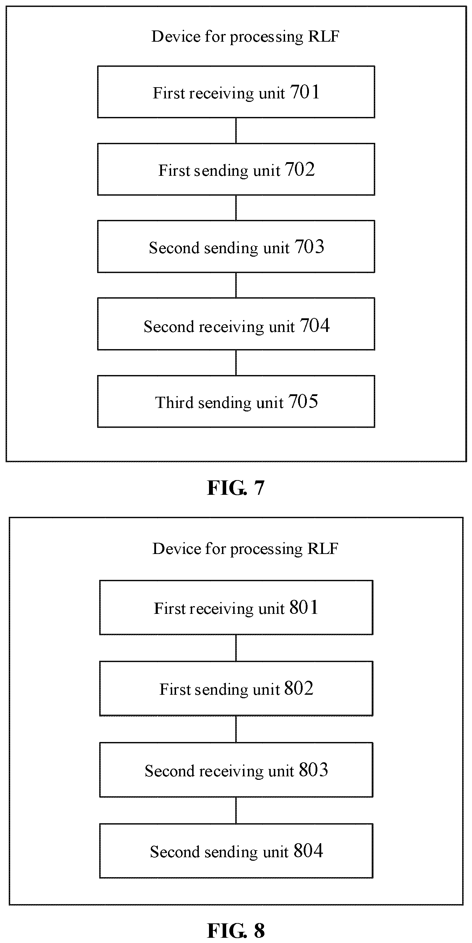

FIG. 7 is a first structure composition diagram of a device for processing RLF according to an embodiment of the disclosure not covered by the claimed invention. As illustrated in FIG. 7, the device includes a first receiving unit 701, a first sending unit 702, a second sending unit 703, a second receiving unit 704 and a third sending unit 705.

The first receiving unit 701 is configured to receive a first message sent by a terminal, the first message being used to indicate that an RLF occurs in a second node side.

The first sending unit 702 is configured to send the first message to the second node such that the second node determines a third node for handover and sends a second message to a first node, the second message being used to indicate, to the first node, handover to the third node.

The second sending unit 703 is configured to initiate a handover preparation process to the third node.

The second receiving unit 704 is configured to receive a third message sent by the third node, the third message carrying a handover command.

The third sending unit 705 is configured to send a fourth message to the second node and send the handover command to the terminal to trigger the terminal to perform a handover process.

In an implementation, the first message includes at least one of the following information:
a measurement result;
first indication information used to indicate a handover request; and
second indication information used to indicate that the RLF occurs in the second node side.

In an implementation, the operation that the second node determines the third node for handover includes the following operations.

The second node determines the third node for handover based on the measurement result included in the first message; or,
the second node directly determines the third node for handover,

In an implementation, the first message is sent from the first node to the second node in a container form via an Xn interface; or,
the first message is sent from the first node to the second node with a content of the first message born in an Xn message.

In an implementation, in the handover preparation process, the first node and the third node allocate to each other GTP identification information for splitting and bearing of interactive data.

In an implementation, in the handover preparation process, the third node allocates to the second node GTP identification information for forwarding data.

The fourth message carries the GTP identification information, which is allocated to the second node by the third node for forwarding data.

The GTP identification information for forwarding data includes first GTP identification information for forwarding uplink data and second GTP identification information for forwarding downlink data.

In an implementation, the handover command sent to the terminal by the first node carries third indication information, the third indication information being used to indicate that the handover command is triggered by the second node.

In an implementation, when the RLF occurs in the second node side and signal quality of the first node is higher than a predetermined threshold value, the terminal sends the first message to the first node.

In an implementation, when the RLF occurs in the second node side and the signal quality of the first node is lower than or equal to the predetermined threshold value, the terminal initiates an RRC connection reestablishment process; or,
when the RLF occurs in the second node side and an RLF occurs in the first node side, the terminal initiates the RRC connection reestablishment process.

It is understood by those skilled in the art that the related descriptions about the device for processing RLF of the embodiments of the disclosure may be understood with reference to the related descriptions about the method for processing RLF of the embodiments of the disclosure.

FIG. 8 is a second structure composition diagram of a device for processing RLF according to an embodiment of the disclosure not covered by the claimed invention. As illustrated in FIG. 8, the device includes a first receiving unit 801, a first sending unit 802, a second receiving unit 803 and a second sending unit 804.

The first receiving unit 801 is configured to receive a first message sent by a terminal, the first message being used to indicate that an RLF occurs in a second node side.

The first sending unit 802 is configured to send the first message to the second node such that the second node determines a third node for handover, initiates a handover preparation process to the third node and, after receiving a handover preparation acknowledgement message sent by the third node, sends a handover command to a first node.

The second receiving unit 803 is configured to receive the handover command sent by the first node.

The second sending unit 804 is configured to send the handover command to the terminal to trigger the terminal to perform a handover process.

In an implementation, the first message includes at least one of the following information:
a measurement result;
first indication information used to indicate a handover request; and
second indication information used to indicate that the RLF occurs in the second node side.

In an implementation, the operation that the second node determines the third node for handover includes the following operations.

The second node determines the third node for handover based on the measurement result included in the first message; or,
the second node directly determines the third node for handover,

In an implementation, the first message is sent from the first node to the second node in a container form via an Xn interface; or,
the first message is sent from the first node to the second node with a content of the first message born in an Xn message.

In an implementation, in the handover preparation process, the second node sends to the third node GTP identification information, which is allocated to the second node by the first node for splitting and bearing of interactive data.

In an implementation, the handover preparation acknowledgement message carries GTP identification information, which is allocated to the second node by the third node for forwarding data.

The GTP identification information for forwarding data includes first GTP identification information for forwarding uplink data and second GTP identification information for forwarding downlink data.

In an implementation, the handover preparation acknowledgement message further carries GTP identification information, which is allocated to the first node by the third node for splitting and bearing of the interactive data.

In an implementation, the handover command sent to the first node by the second node carries the GTP identification information, which is allocated to the first node by the third node for splitting and bearing of the interactive data.

In an implementation, when the RLF occurs in the second node side and signal quality of the first node is higher than a predetermined threshold value, the terminal sends the first message to the first node.

In an implementation, when the RLF occurs in the second node side and the signal quality of the first node is lower than or equal to the predetermined threshold value, the terminal initiates an RRC connection reestablishment process; or,
when the RLF occurs in the second node side and an RLF occurs in the first node side, the terminal initiates the RRC connection reestablishment process.

It is understood by those skilled in the art that the related descriptions about the device for processing RLF of the embodiments of the disclosure may be understood with reference to the related descriptions about the method for processing RLF of the embodiments of the disclosure.

In addition, the embodiments of the disclosure also provides a device for processing RLF, which includes: a receiving unit; a sending unit, configured to send a first message to a first node, the first message being used to indicate that an RLF and/or a handover failure occur(s) in a second node side; and a triggering unit, configured to, if the receiving unit does not receive target signaling sent by a network side, trigger an RRC connection reestablishment process.

Herein, the first message includes at least one of the following information:
a measurement result;
first indication information used to indicate a handover request; and
second indication information used to indicate that the RLF and/or the handover failure occur(s) in the second node side.

In an implementation, the device further includes a timing unit, configured to, after the sending unit sends the first message to the first node, start a first timer. If the receiving unit does not receive the target signaling sent by the network side before the first timer expires, the triggering unit triggers the RRC connection reestablishment process. Furthermore, the timing unit is further configured to, if the receiving unit receives the target signaling sent by the network side before the first timer expires, stop the first timer.

In the solution, the target signaling at least includes a handover command or RRC connection reconfiguration signaling.

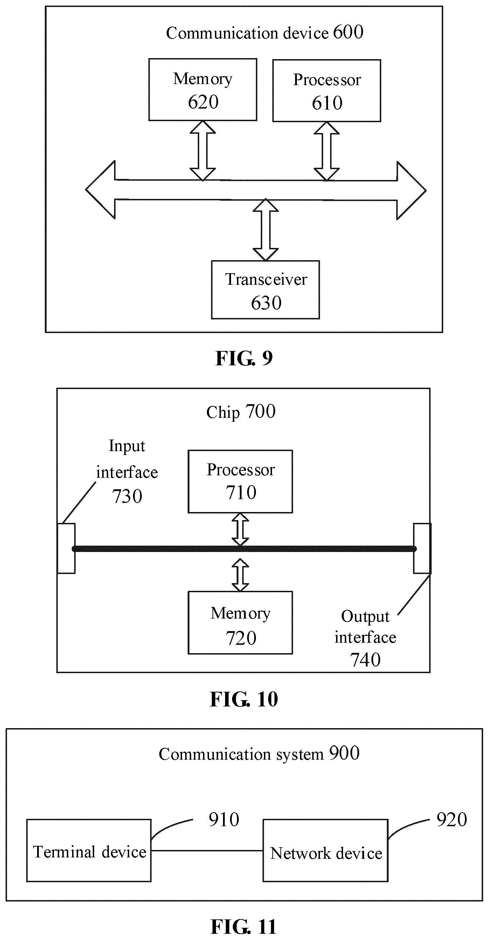

FIG. 9 is a schematic structure diagram of a communication device 600 according to an embodiment of the disclosure not covered by the claimed invention. The communication device may be a terminal device and may also be a network device. The communication device 600 illustrated in FIG. 9 includes a processor 610, and the processor 610 may call and run a computer program in a memory to implement the method in the embodiments of the disclosure.

Optionally, as illustrated in FIG. 9, the communication device 600 may further include the memory 620. The processor 610 may call and run the computer program in the memory 620 to implement the methods in the embodiments of the disclosure.

The memory 620 may be an independent device independent of the processor 610 and may also be integrated into the processor 610.

Optionally, as illustrated in FIG. 9, the communication device 600 may further include a transceiver 630, and the processor 610 may control the transceiver 630 to communicate with another device, specifically sending information or data to the other device or receiving information or data sent by the other device.

The transceiver 630 may include a transmitter and a receiver. The transceiver 630 may further include antennae, and the number of the antennae may be one or more.

Optionally, the communication device 600 may specifically be a network device of the embodiment of the disclosure, and the communication device 600 may implement corresponding flows implemented by the network device in each method of the embodiments of the disclosure. For simplicity, elaborations are omitted herein.

Optionally, the communication device 600 may specifically be the mobile terminal/terminal device of the embodiments of the disclosure, and the communication device 600 may implement corresponding flows implemented by the mobile terminal/terminal device in each method of the embodiments of the disclosure. For simplicity, elaborations are omitted herein.

FIG. 10 is a schematic structure diagram of a chip according to another embodiment of the disclosure not covered by the claimed invention. The chip 700 illustrated in FIG. 10 includes a processor 710, and the processor 710 may call and run a computer program in a memory to implement the methods in the embodiments of the disclosure.

Optionally, as illustrated in FIG. 10, the chip 700 may further include the memory 720. The processor 710 may call and run the computer program in the memory 720 to implement the methods in the embodiments of the disclosure.

The memory 720 may be an independent device independent of the processor 710 and may also be integrated into the processor 710.

Optionally, the chip 700 may further include an input interface 730. The processor 710 may control the input interface 730 to communicate with another device or chip, specifically acquiring information or data sent by the other device or chip.

Optionally, the chip 700 may further include an output interface 740. The processor 710 may control the output interface 740 to communicate with the other device or chip, specifically outputting information or data sent by the other device or chip.

Optionally, the chip may be applied to the network device of the embodiment of the disclosure, and the chip may implement corresponding flows implemented by the network device in the method of the embodiment of the disclosure. For simplicity, elaborations are omitted herein.

Optionally, the chip may be applied to the mobile terminal/terminal device of the embodiment of the disclosure, and the chip may implement corresponding flows implemented by the mobile terminal/terminal device in each method of the embodiment of the disclosure. For simplicity, elaborations are omitted herein.

It is to be understood that the chip mentioned in the embodiment of the disclosure may also be called a system-level chip, a system chip, a chip system or a system on chip, etc.

FIG. 11 is a second block diagram of a communication system 900 according to an embodiment of the disclosure. As illustrated in FIG. 9, a communication system 900 includes a terminal device 910 and a network device 920.

The terminal device 910 may be configured to realize corresponding functions realized by the terminal device in the method, and the network device 920 may be configured to realize corresponding functions realized by the network device in the method. For simplicity, elaborations are omitted herein.

It is to be understood that the processor in the embodiment of the disclosure may be an integrated circuit chip and has a signal processing capability. In an implementation process, each step of the method embodiment may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or performed. The universal processor may be a microprocessor or the processor may also be any conventional processor and the like. The steps of the method disclosed in combination with the embodiments of the disclosure may be directly embodied to be performed and completed by a hardware decoding processor or performed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps of the methods in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to perform corresponding flows implemented by the network device in each method of the embodiments of the disclosure. For simplicity, elaborations are omitted herein.

Optionally, the computer-readable storage medium may be applied to a mobile terminal/terminal device in the embodiments of the disclosure, and the computer program enables a computer to perform corresponding flows implemented by the mobile terminal/terminal device in each method of the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to perform corresponding flows implemented by the network device in each method of the embodiments of the disclosure. For simplicity, elaborations are omitted herein.

Optionally, the computer program product may be applied to a mobile terminal/terminal device in the embodiments of the disclosure, and the computer program instruction enables the computer to perform corresponding flows implemented by the mobile terminal/terminal device in each method of the embodiments of the disclosure. For simplicity, elaborations are omitted herein.

The embodiments of the disclosure also provide a computer program.

Optionally, the computer program may be applied to a network device in the embodiments of the disclosure, and the computer program runs in a computer to enable the computer to perform corresponding flows implemented by the network device in each method of the embodiments of the disclosure. For simplicity, elaborations are omitted herein.

Optionally, the computer program may be applied to a mobile terminal/terminal device in the embodiments of the disclosure, and the computer program runs in the computer to enable the computer to perform corresponding flows implemented by the mobile terminal/terminal device in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are performed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not performed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to perform all or part of the steps of the method in each embodiment of the disclosure. The abovementioned storage medium includes: various media capable of storing program codes such as a U disk, a mobile hard disk, a ROM, a RAM, a magnetic disk or an optical disk.

The above is only the specific implementation of the disclosure and not intended to limit the scope of protection of the disclosure. Therefore, the scope of protection of the disclosure shall be subject to the scope of protection of the claims.

## Claims

1. A method for processing Radio Link Failure, RLF, the method comprising:
receiving (401), by a Secondary Node, a first message from a terminal operating in a dual connectivity mode, the first message being used to indicate that a RLF occurs in a Master Node;
sending (402), by the Secondary Node, the first message to the Master Node, to enable the Master Node to determine a Target Master Node for handover, the first message being sent from the Secondary Node to the Master Node with a content of the first message borne in a Xn message,
initiating, by the Master Node, a handover preparation process to the Target Master Node;
sending, by the Master Node, a handover command to the Secondary Node after the Master Node has received a handover preparation acknowledgement message from the Target Master Node; and
sending (403), by the Secondary Node, the handover command to the terminal to trigger the terminal to perform a handover process,
**characterized in that**, when the RLF occurs in the Master Node and signal quality of the Secondary Node is higher than a predetermined threshold value, the terminal sends the first message to the Secondary Node.

2. The method of claim 1, wherein the first message comprises at least one of:
a measurement result;
first indication information used to indicate a handover request; and
second indication information used to indicate that the RLF occurs in the Master Node.

3. A communication system (100) comprising a dual connectivity network and a terminal (120) operating in a dual connectivity mode, the dual connectivity network comprising a Master Node, a Secondary Node and a Target Master Node, the communication system configured to carry out the method of any of claims 1-2.

## Patentansprüche

1. Verfahren zum Verarbeiten von RLF (Radio Link Failure), wobei das Verfahren umfasst:
Empfangen (401) einer ersten Nachricht von einem Endgerät, das in einem Dualkonnektivitätsmodus arbeitet, durch einen Sekundärknoten, wobei die erste Nachricht dafür verwendet wird, anzuzeigen, dass ein RLF in einem Masterknoten auftritt;
Senden (402) der ersten Nachricht an den Masterknoten durch den Sekundärknoten, um zu ermöglichen, dass der Masterknoten einen Zielmasterknoten für Handover bestimmt, wobei die erste Nachricht von dem Sekundärknoten an den Masterknoten mit einem Inhalt der ersten Nachricht, der in einer Xn-Nachricht getragen wird, gesendet wird,
Einleiten eines Handover-Vorbereitungsprozesses an den Zielmasterknoten durch den Masterknoten;
Senden eines Handover-Befehls an den Sekundärknoten durch den Masterknoten, nachdem der Masterknoten eine Handover-Vorbereitungsbestätigungsnachricht von dem Zielmasterknoten erhalten hat; und
Senden (403) des Handover-Befehls an das Endgerät durch den Sekundärknoten, um auszulösen, dass das Endgerät einen Handover-Prozess durchführt,
**dadurch gekennzeichnet, dass**, wenn der RLF in dem Masterknoten auftritt und eine Signalqualität des Sekundärknotens höher als ein vorbestimmter Schwellenwert ist, das Endgerät die erste Nachricht an den Sekundärknoten sendet.

2. Verfahren nach Anspruch 1, wobei die erste Nachricht mindestens eines umfasst von:
einem Messergebnis;
erster Anzeigeinformation, die dafür verwendet wird, eine Handover-Anfrage anzuzeigen; und
zweiter Anzeigeinformation, die dafür verwendet wird anzuzeigen, dass der RLF in dem Masterknoten auftritt.

3. Kommunikationssystem (100), das ein Dualkonnektivitätsnetzwerk und ein Endgerät (120), das in einem Dualkonnektivitätsmodus arbeitet, aufweist, wobei das Dualkonnektivitätsnetzwerk einen Masterknoten, einen Sekundärknoten und einen Zielmasterknoten aufweist, wobei das Kommunikationssystem dazu ausgebildet ist, das Verfahren nach einem der Ansprüche 1-2 auszuführen.

## Revendications

1. Procédé pour traiter une Défaillance de Liaison Radio, RLF, le procédé comprenant :
la réception (401), par un Noeud Secondaire, d'un premier message en provenance d'un terminal fonctionnant dans un mode de double connectivité, le premier message étant utilisé pour indiquer qu'une RLF se produit dans un Noeud Maître ;
l'envoi (402), par le Noeud Secondaire, du premier message au Noeud Maître, pour permettre au Noeud Maître de déterminer un Noeud Maître Cible pour le transfert intercellulaire, le premier message étant envoyé du Noeud Secondaire au Noeud Maître avec un contenu du premier message transporté dans un message Xn,
le lancement, par le Noeud Maître, d'un processus de préparation de transfert intercellulaire vers le Noeud Maître Cible ;
l'envoi, par le Noeud Maître, d'une commande de transfert intercellulaire au Noeud Secondaire après que le Noeud Maître a reçu un message d'accusé de réception de préparation de transfert intercellulaire en provenance du Noeud Maître Cible ; et
l'envoi (403), par le Noeud Secondaire, de la commande de transfert intercellulaire au terminal pour déclencher la réalisation par le terminal d'un processus de transfert intercellulaire,
**caractérisé en ce que**, lorsque la RLF se produit dans le Noeud Maître et que la qualité de signal du Noeud Secondaire est supérieure à une valeur de seuil prédéterminée, le terminal envoie le premier message au Noeud Secondaire.

2. Procédé selon la revendication 1, dans lequel le premier message comprend au moins l'un :
d'un résultat de mesure ;
de premières informations d'indication utilisées pour indiquer une demande de transfert intercellulaire ; et
de secondes informations d'indication utilisées pour indiquer que la RLF se produit dans le Noeud Maître.

3. Système de communication (100) comprenant un réseau à double connectivité et un terminal (120) fonctionnant dans un mode à double connectivité, le réseau à double connectivité comprenant un Noeud Maître, un Noeud Secondaire et un Noeud Maître Cible, le système de communication étant configuré pour mettre en oeuvre le procédé selon l'une quelconque des revendications 1-2.
